# EUROPÄISCHE PATENTANMELDUNG

(11) **EP 4 539 260 A1**
(43) Veröffentlichungstag der Anmeldung: **16.04.2025**
(21) Anmeldenummer: 24203294.4
(22) Anmeldetag: 27.09.2024
(51) Int. Cl.: H01R 13/11, B60R 16/02, H01R 13/52, H01R 13/453, H01R 101/00

(54) **EINPOLIGES ELEKTRISCHES STECKVERBINDERSYSTEM**

(30) Priorität: 05.10.2023 DE 102023127142
(71) Anmelder: HARTING Electric Stiftung & Co. KG, 32339 Espelkamp (DE)
(72) Erfinder: Griepenstroh, Sebastian, 32339 Espelkamp (DE)
(74) Vertreter: Eisenführ Speiser

(57) **Zusammenfassung**

Die Erfindung geht aus von einem einpoligen Steckverbindersystem bestehend aus einem Steckverbinder und einem Gegensteckverbinder, wobei der Steckverbinder ein Steckverbinder-Gehäuse, eine Steckverbinder-Kontaktdichtung und ein Steckverbinder-Kontaktelement aufweist und wobei der Gegensteckverbinder ein Gegensteckverbinder-Gehäuse, eine Gegensteckverbinder-Kontaktdichtung, einen Gegensteckverbinder-Berührschutz und ein Gegensteckverbinder-Kontaktelement aufweist. Dabei steht die Steckverbinder-Kontaktdichtung mit einer Steckverbinder-Dichtfeder in funktionalem Eingriff, sodass die Steckverbinder-Kontaktdichtung in Steckrichtung entgegen einer Kraft der Steckverbinder-Dichtfeder verlagerbar innerhalb des Steckverbinder-Gehäuses angeordnet ist. Weiterhin steht die Gegensteckverbinder-Kontaktdichtung mit einer Gegensteckverbinder-Dichtfeder in funktionalem Eingriff, sodass die Gegensteckverbinder-Kontaktdichtung in Gegensteckrichtung entgegen einer Kraft der Gegensteckverbinder-Dichtfeder verlagerbar innerhalb des Gegensteckverbinder-Gehäuses angeordnet ist.

## Beschreibung

Die Erfindung geht aus von einem einpoligen elektrischen Steckverbindersystem nach der Gattung des unabhängigen Anspruchs 1.

Derartige Steckverbindersysteme werden benötigt, um eine sichere elektrische Kontaktierung von Arbeitsgeräten in rauen Umgebungen, beispielsweise für Lastkraftwagen, oder bei Traktoren und Arbeitsmaschinen auf agrikulturellen Feldern, Waldgebieten, Steinbrüchen, aber auch in industrieller Umgebung wie Fertigungshallen und Werkstätten. Insbesondere werden derartige Steckverbindersysteme für schwere, mobile Arbeitsmaschinen mit gleichstrombetriebenen Arbeitseinheiten benötigt.

### Stand der Technik

Steckverbindersysteme für raue Umgebungen sind üblicherweise mit Staubkappen versehen. Diese Staubkappen werden häufig mit Verlustsicherungen versehen, um bei Verwendung des Steckverbindersystems nicht gesondert aufbewahrt werden zu müssen und dabei möglicherweise verloren zu gehen.

Alternativ gibt es Steckverbindersysteme, welche an dem Gehäuse des Steckverbinders und/oder des Gegensteckverbinders integriert eine Federkraft betätigte Kappe aufweisen, welche selbsttätig geschlossen wird, sobald das Steckverbindersystem nicht genutzt wird.

Ein Beispiel für derartige Steckverbindersysteme stellt die US 4,061,407 A dar, welche eine elektrische Verbinderanordnung mit einem Stecker und einer Buchse offenbart, wobei die Buchse eine Abdeckung aufweist, welche von einer Feder in eine geschossene Richtung gelenkt wird, wobei die Abdeckung den Stecker im verbundenen Zustand in Richtung der Buchse hält.

Nachteilig an bekannten Steckverbindersystemen ist die Verwendung von externen Bauteilen, wie einer Federbetätigten, externen Abdeckkappe, oder einfachen Gummitüllen und/oder Kunststoffkappen. Einerseits können diese Kappen einfach verloren gehen. Andererseits werden derartige Kappen schnell beschädigt, wodurch logischerweise Ihre Fähigkeit, die Bauteile des Steckverbindersystems vor dem Eindringen von Fremdmedien, wie Schmutz, Staub, Fluiden oder Vergleichbaren zu schützen, eingebüßt wird.

### Aufgabenstellung

Die Aufgabe der Erfindung besteht darin, einen gegenüber Fremdmedien selbstständig abdichtendes Steckverbindersystem mit einfacher Verriegelungsmechanismus anzubieten. Eine weitere Aufgabe der Erfindung besteht darin, einen Steckverbinder und ein Gegensteckverbinder für ein solches Steckverbindersystem anzubieten.

Die Aufgabe wird durch den Gegenstand des unabhängigen Anspruchs 1 gelöst.

Die Erfindung geht aus von einem einpoligen Steckverbindersystem bestehend aus einem Steckverbinder und einem Gegensteckverbinder, wobei der Steckverbinder ein Steckverbinder-Gehäuse, eine Steckverbinder-Kontaktdichtung und ein Steckverbinder-Kontaktelement aufweist und wobei der Gegensteckverbinder ein Gegensteckverbinder-Gehäuse, eine Gegensteckverbinder-Kontaktdichtung, einen Gegensteckverbinder-Berührschutz und ein Gegensteckverbinder-Kontaktelement aufweist. Dabei steht die Steckverbinder-Kontaktdichtung mit einer Steckverbinder-Dichtfeder in funktionalem Eingriff, sodass die Steckverbinder-Kontaktdichtung in Steckrichtung entgegen einer Kraft der Steckverbinder-Dichtfeder verlagerbar innerhalb des Steckverbinder-Gehäuses angeordnet ist. Weiterhin steht die Gegensteckverbinder-Kontaktdichtung mit einer Gegensteckverbinder-Dichtfeder in funktionalem Eingriff, sodass die Gegensteckverbinder-Kontaktdichtung in Gegensteckrichtung entgegen einer Kraft der Gegensteckverbinder-Dichtfeder verlagerbar innerhalb des Gegensteckverbinder-Gehäuses angeordnet ist.

Die Begriffe "Steckverbinder" und "Gegensteckverbinder" sind gewählt, um zwei sich unterscheidende Verbinder innerhalb des Steckverbindersystems zu erläutern. Sämtliche Eigenschaften des Gegensteckverbinders können für den Steckverbinder zutreffen, und umgekehrt, sofern eine sinnvolle Korrespondenz von Steckverbinder und Gegensteckverbinder gewährleistet ist.

Die "Gehäuse", sowohl das Steckverbindergehäuse, als auch das Gegensteckverbindergehäuse, sind dazu ausgerichtet, die Kontaktelemente, also das Steckverbinder-Kontaktelement und das Gegensteckverbinder-Kontaktelement in sich aufzunehmen. Erfindungsgemäß sind die Gehäuse dazu ausgerichtet, die Kontaktelemente entlang ihrer Längsausrichtung vollständig zu umgeben.

Unter dem Begriff "Kontaktelement" sind elektrisch leitende Elemente zu verstehen, welche miteinander in korrespondierenden Eingriff bringbar sind und jeweils mit einem elektrischen Leiter, vorzugsweise einem elektrisch leitenden Kabel verbunden sind. Im Folgenden werden mit Bezug auf die Kontaktelemente Begriffe wie "kontaktseitig" oder "kabelseitig" eingesetzt. Hierbei ist mit "kontaktseitig" die Seite eines Kontaktelementes gemeint, welche mit einem korrespondierenden Kontaktelement in elektrisch leitende Verbindung bringbar ist. Als "kabelseitig" wird die Seite bezeichnet, welche der "Kontaktseite" gegenüberliegt, also an der ein elektrischer Leiter, wie ein elektrisch leitendes Kabel angeschlossen ist.

Als "Kontaktdichtung" sind Dichtungselemente vorgesehen, welche einen Kontakt im Wesentlichen vor Fremdmedien abdichten. Erfindungsgemäß wirken die erwähnten Kontaktdichtungen zumindest mit dem jeweiligen Gehäuse zusammen, um die gewünschte Abdichtung zu erzielen.

Mit dem Begriff "Dichtfeder" sind Federelemente gemeint, welche dazu ausgelegt die jeweilige Kontaktdichtung des Steckverbinders oder des Gegensteckverbinders zu einer vorgesehenen Ausgangsposition zurückzuführen. Sobald die jeweilige Dichtfeder, also die Steckverbinder-Dichtfeder, oder die Gegensteckverbinder-Dichtfeder nicht mit einer definierten Kraft entgegen der Steckrichtung (im Falle der Steckverbinder-Dichtfeder), beziehungsweise Gegensteckrichtung (im Falle der Gegensteckverbinder-Dichtfeder) beaufschlagt wird, zwingt die Dichtfeder die zugehörige Kontaktfeder in Steckrichtung, bis zum Ende eines Gehäuses. Genauer gesagt zwingt die Steckverbinder-Dichtfeder die Steckverbinder-Kontaktdichtung in Steckrichtung zu einem steckseitigen Ende des Steckverbinder-Gehäuses. Hier dichtet die von der Steckverbinder-Dichtfeder bewegte Steckverbinder-Kontaktdichtung das Steckverbinder-Kontaktelement gegen Fremdmedien ab. Vorzugsweise wird hierbei eine in etwa bündige Stirnfläche am steckseitigen Ende des Steckverbinder-Gehäuses mit dem Steckverbinder-Dichtelement gebildet. Dazu analog zwingt die Gegensteckverbinder-Dichtfeder die Gegensteckverbinder-Kontaktdichtung in Gegensteckrichtung zu einem steckseitigen Ende des Gegensteckverbinder-Gehäuses. Die von der Gegensteckverbinder-Dichtfeder bewegte Gegensteckverbinder-Kontaktdichtung dichtet entsprechend das Gegensteckverbinder-Kontaktelement gegen Fremdmedien ab. Vorzugsweise wird hierbei eine in etwa bündige Stirnfläche am steckseitigen Ende des Gegensteckverbinder-Gehäuses mit dem Gegensteckverbinder-Dichtelement und dem Gegensteckverbinder-Berührschutz gebildet. Erfindungsgemäß wirkt die Steckverbinder-Dichtfeder im ungesteckten Zustand des Steckverbinders mit einer Kraft von größergleich 10 Newton (N), besser mit einer Kraft von größergleich 14,7 N, vorzugsweise mit einer Kraft von größergleich 30 N, alternativ mit einer Kraft von größergleich 50 N in Steckrichtung. Um einer Normung gegen versehentliches Berühren zu entsprechen, wird eine Kraft von 20 N benötigt, um das Steckverbinder-Dichtelement in Gegensteckrichtung zu verdrängen. Dadurch bleibt die Dichtung sicher verschlossen und schütz den Steckverbinder gegen ein ungewolltes Eindringen von Fremdmedien, bis ein Steckvorgang mit einem korrespondierenden Gegensteckverbinder eingeleitet wird. Ebenso erfindungsgemäß wirkt die Gegensteckverbinder-Dichtfeder im ungesteckten Zustand des Gegensteckverbinders mit einer Kraft von größergleich 10 N, besser mit einer Kraft von größergleich 14,7 N, vorzugsweise mit einer Kraft von größergleich 30 N, alternativ mit einer Kraft von größergleich 50 N in Gegensteckrichtung. Um einer Normung gegen versehentliches Berühren zu entsprechen, wird eine Kraft von 20 N benötigt, um das Gegensteckverbinder-Dichtelement in Steckrichtung zu verdrängen. Dadurch bleibt die Dichtung sicher verschlossen und schütz den Gegensteckverbinder gegen ein ungewolltes Eindringen von Fremdmedien, bis ein Steckvorgang mit einem korrespondierenden Steckverbinder eingeleitet wird.

Der Begriff "Gegensteckverbinder-Berührschutz" meint primär eine elektrisch nicht in leitender Verbindung mit einem leitenden Element stehende Einrichtung, wodurch bei versehentlicher oder auch beabsichtigter Berührung des Gegensteckverbinders keine elektrische Verbindung zu einem Bediener und/oder einer dritten Person hergestellt wird. Vorzugsweise wird ein derartiger Berührschutz aus einem nichtleitenden Kunststoff hergestellt. Alternativ kann zur Erfüllung eines Berührschutzes auch ein nichtleitendes Metall eingesetzt werden. Geschickter Weise kann auch ein kautschukhaltiges Material eingesetzt werden. Selbstverständlich sind Kombinationen der genannten Materialien denkbar, wie kunststoffüberzogene Metallelemente, oder gummiüberzogene Kunststoffelemente, oder dergleichen. Der Berührschutz wird vorzugsweise auf einen zylindrischen Teil eines Gegensteckverbinder-Kontaktelements aufgebracht.

Vorteilhafterweise wird vorgeschlagen, dass das Steckerbinder-Dichtelement und das Gegensteckverbinder-Dichtelement mit Formelementen ausgebildet sind, welche sicherstellen, dass die Dichtelemente das Gehäuse in etwa bündig abschließen. Damit ist gemeint, dass ein Steckverbinder-Dichtelement beispielsweise eine umlaufende Nut aufweist, in die ein Steckverbinder-Kontaktelement eingreift, sobald eine gewünschte Endposition des Steckverbinder-Dichtelements entlang dem Steckverbinder-Gehäuse, genauer gesagt einer in Steckrichtung endseitigen Stirnseite, erreicht ist. Für den Gegensteckverbinder ist damit also gemeint, dass ein Gegensteckverbinder-Dichtelement beispielsweise eine umlaufende Feder, oder einen Anschlag, aufweist, welche an eine Innenseite des Gegensteckverbinder-Gehäuse anschlägt, sobald eine gewünschte Endposition des Gegensteckverbinder-Dichtelements entlang dem Gegensteckverbinder-Gehäuse, genauer gesagt einer in Gegensteckrichtung endseitigen Stirnseite, erreicht ist. Der Gegensteckverbinder-Berührschutz fügt sich erfindungsgemäß etwa bündig in die Anordnung aus dem Gegensteckverbinder-Dichtelement und der Stirnseite des Gegensteckverbinders.

Eine Ausführung sieht vor, dass das Steckverbinder-Kontaktelement einen hohlzylindrischen Steckkontakt-Crimpbereich, einen im wesentlichen hohlzylindrischen Steckkontakt-Kontaktbereich und innerhalb des Steckkontakt-Kontaktbereichs eine Steckkontakt-Federaufnahme aufweist. In dem Steckkontakt-Crimpbereich wird ein elektrischer Leiter eingeführt und dort elektrisch kontaktierend verpresst, also vercrimpt. Der Steckkontakt-Kontaktbereich ist für die Kontaktierung mit einem korrespondierenden Gegensteckkontakt-Kontaktbereich vorgesehen. Das vorgeschlagene Steckverbinder-Kontaktelement ist als Buchsenkontakt ausgeführt. Der Steckkontakt-Kontaktbereich weist Einschlitzungen entlang der Längsachse auf, welche eine elastische Verformung zulassen. Die Einschlitzungen können parallel zur Längsachse ausgeführt sein. Alternativ können die Einschlitzungen parallel zu einer Längsebene ausgeführt sein. Besonders vorteilhaft sind die Einschlitzungen von der Längsachse aus in Steckrichtung blickend rotierend versetzt ausgeführt. Die Steckkontakt-Federaufnahme kann als in Steckrichtung weisender Zapfen ausgebildet sein. Dabei entspricht der Außendurchmesser des Zapfens im Wesentlichen dem Innendurchmesser der Steckverbinder-Dichtfeder. Alternativ wird die Steckkontakt-Federaufnahme als konzentrische Nut ausgeführt, wobei die Nutbreite im Wesentlichen der Stärke der Steckverbinder-Dichtfeder entspricht. Darüber hinaus ist die Steckkontakt-Federaufnahme als konzentrische Ausnehmung ausgeführt, wobei der Radius der Ausnehmung im Wesentlich dem Außendurchmesser der Steckverbinder-Dichtfeder entspricht. Die Steckkontakt-Federaufnahme sorgt für einen sicheren Sitz der Steckverbinder-Dichtfeder im Steckverbinder-Kontaktelement, wodurch eine sichere Verschiebung der Steckerbinder-Kontaktdichtung sichergestellt wird.

Eine weitere Ausführungsform sieht vor, dass das Gegensteckverbinder-Kontaktelement einen hohlzylindrischen Gegensteckkontakt-Crimpbereich und einen im wesentlichen zylindrischen Gegensteckkontakt-Kontaktbereich aufweist, wobei in Gegensteckrichtung endseitig des Gegensteckkontakt-Kontaktbereiches eine Gegensteckkontakt-Berührschutzaufnahme ausgeformt ist, welche zur Aufnahme eines Gegensteckverbinder-Berührschutzes vorgesehen ist. Dieser Gegensteckverbinder-Berührschutz wird bevorzugt auf das Gegensteckverbinder-Kontaktelement aufgepresst. Alternativ kann der Gegensteckverbinder-Berührschutz in eine als Gewinde ausgeführte Gegensteckkontakt-Berührschutzaufnahme aufgeschraubt werden. Weiterhin ist auch eine stoffschlüssige Verbindung, beispielsweise durch Verkleben, des Gegensteckkontakt-Berührschutzes auf, beziehungsweise an der Gegensteckverbinder-Berührschutzaufnahme.

In einer alternativen Ausführungsform weist das Gegensteckverbinder-Kontaktelement einen hohlzylindrischen Gegensteckkontakt-Crimpbereich und einen im wesentlichen hohlzylindrischen Gegensteckkontakt-Kontaktbereiches auf, wobei in Gegensteckrichtung endseitig des Gegensteckkontakt-Kontaktbereiches eine Gegensteckkontakt-Berührschutzaufnahme ausgeformt ist, welche zur Aufnahme eines Gegensteckverbinder-Berührschutzes vorgesehen ist. Dieser Gegensteckverbinder-Berührschutz wird bevorzugt auf das Gegensteckverbinder-Kontaktelement aufgepresst. Alternativ kann der Gegensteckverbinder-Berührschutz in eine als Gewinde ausgeführte Gegensteckkontakt-Berührschutzaufnahme aufgeschraubt werden. Weiterhin ist auch eine stoffschlüssige Verbindung, beispielsweise durch Verkleben, des Gegensteckkontakt-Berührschutzes auf, beziehungsweise an der Gegensteckverbinder-Berührschutzaufnahme.

In einer weiterentwickelten Ausführungsform ist vorgesehen, dass das Gegensteckverbinder-Kontaktelement innerhalb hohlzylindrischen Gegensteckkontakt-Kontaktbereichs weiterhin zumindest ein Gegensteckkontakt-Stiftelement aufweist, wobei ein korrespondierendes, Steckverbinder-Kontaktelement sich zwischen dem Gegensteck-Kontaktbereich und dem Gegensteckkontakt-Stiftelement elektrisch kontaktierend fügt. Um eine derartige Kontaktierungsform für raue Arbeitsumgebungen sinnvoll und sicher zu nutzen wird weiterhin vorgeschlagen, dass zur Kontaktierung von Gegensteckverbinder-Kontaktelement und Steckverbinder-Kontaktelement, Übertragungsfederelemente eingesetzt werden. Hierzu werden im Stand der Technik häufig ringförmige Spiralfedern eingesetzt. Alternativ dazu können federnd ausgeführte, ringartige Kontaktbänder genutzt werden.

In einer geschickten Ausführungsform ist das Steckverbinder-Gehäuse derart ausgeformt, dass es die Gegensteckverbinder-Kontaktdichtung bei einem Steckvorgang verdrängt. Auf diese Weise wird ein sicherer Steckvorgang von Steckverbinder und Gegensteckverbinder gewährleistet, wobei das Steckverbindergehäuse das Steckverbinder-Kontaktelement insofern entlastet, dass die Kraft zur Verdrängung der Gegensteckverbinder-Kontaktdichtung auf das Steckverbinder-Gehäuse wirkt, um dadurch möglicherweise Beschädigungen an dem Steckverbinder-Kontaktelement weitestgehend zu verhindern.

In einer cleveren Ausführungsform ist der Gegensteckverbinder-Berührschutz derart ausgeformt ist, dass er die Steckverbinder-Kontaktdichtung bei einem Steckvorgang verdrängt. Auf diese Weise wird ein sicherer Steckvorgang von Steckverbinder und Gegensteckverbinder gewährleistet, wobei der Gegensteckverbinder-Berührschutz das Gegensteckverbinder-Kontaktelement insofern schützt, dass die Kraft zur Verdrängung der Steckverbinder-Kontaktdichtung von dem Gegensteckverbinder-Berührschutz wirkt, wodurch mögliche Beschädigungen an dem Gegensteckverbinder-Kontaktelement weitestgehend verhindert werden.

Eine sinnvolle Ausführungsform sieht vor, dass das Steckverbinder-Kontaktelement im Wesentlichen als Buchsenkontakt ausgeführt ist und dass das Gegensteckverbinder-Kontaktelement im Wesentlichen als Stiftkontakt ausgeführt ist oder umgekehrt. Dabei kann ein Stiftkontakt in diesem Zusammenhang auch als Stiftkontakt mit konzentrischer Kontakthülse ausgeformt sein, wobei durch diese Ausführung eine besonders bevorzugte Kontaktierung erfolgen kann. Der Buchsenkontakt kann auf diese Weise in seinem Inneren von dem Stiftkontaktelement elektrisch leitend verbunden werden, während zeitgleich eine äußere Kontaktierung durch die konzentrische Kontakthülse erfolgt.

Eine weiterentwickelte Ausführungsform schlägt vor, dass das Steckverbinder-Kontaktelement in Steckrichtung endseitig der Steckkontakt-Kontaktbereichs eine Steckkontakt-Kontaktform aufweist, welche die Kontaktierung des Steckverbinder-Kontaktelements mit dem Gegensteckverbinder-Kontaktelement sicherstellt. Vorteilhafterweise wird eine Steckkontakt-Kontaktform als nach innen gerichtete, umlaufende Wulst ausgeführt. Das bevorzugt als Buchse ausgeführte Steckverbinder-Kontaktelement weist idealerweise längsseitig verlaufende Einschlitzungen auf, welche eine elastische Verformung des Steckkontakt-Kontaktbereichs ermöglichen, wodurch die Steckkontakt-Kontaktform besonders vorteilhaft zur Sicherstellung der elektrischen Kontaktierung eingesetzt wird.

Weiterhin sieht eine Ausführungsform vor, dass der Steckverbinder eine Verriegelungsform aufweist und der Gegensteckverbinder einen mit der Verriegelungsform korrespondierende Verriegelungsmechanismus aufweist, oder umgekehrt, wobei der Verriegelungsmechanismus durch einen ersten Druck in Steckrichtung verriegelnd ausgelöst wird. Derartige Druckverriegelungen bieten sich für eine selbstdichtende Lösung besonders an. Besonders bevorzugt werden Lösungen, welche auf Druck verriegelt und Zug und gelöst werden. Durch die Druckbewegung zum Verriegeln können die Kontaktdichtungen, also das Steckverbinder-Kontaktdichtung und die Gegensteckverbinder-Kontaktdichtung, von den jeweiligen Gegenspielern, also dem Steckverbindergehäuse und dem Gegensteckverbinder-Berührschutz, erfindungsgemäß verdrängt werden, sodass eine elektrische Kontaktierung des Steckverbinder-Kontaktelements und des Gegensteckverbinder-Kontaktelements erfolgt. Gleichzeitig verriegelt der Verriegelungsmechanismus den Steckverbinder mit dem Gegensteckverbinder in dieser kontaktierenden Position. Durch einen Lösemechanismus, in Bekannten Lösungen oftmals als Entriegelungshülse ausgeführt, wird die Verriegelung gelöst, sodass der Steckverbinder von dem Gegensteckverbinder getrennt werden kann. Hierbei sorgen die Dichtfedern, also die Steckverbinder-Dichtfeder und die Gegensteckverbinder-Dichtfeder, dafür, dass die Kontaktdichtungen wieder in die jeweilige, dichtende Position zurückgeführt werden. Derartige Verriegelungsmechanismen werden im Stand der Technik auch als "Push-Pull-Verriegelungen" bezeichnet.

Eine besonders vorteilhafte Ausführungsform schlägt vor, dass der Verriegelungsmechanismus durch einen zweiten Druck in Steckrichtung aus der Verriegelungsform gelöst wird. Anders gesagt verriegelt die Ausführungsform auf einen ersten Druck, wie zuvor beschrieben und auf erneuten, zweiten Druck wird die Verriegelung gelöst, sodass der Steckverbinder von dem Gegensteckverbinder getrennt werden kann. Im Stand der Technik werden derartige Verriegelungen auch als "Kugelschreiber-Verriegelung" oder "Push-Push-Verriegelung" bezeichnet.

Eine weitere Aufgabe wird gelöst durch einen einpoligen Steckverbinder, aufweisend ein Steckverbinder-Gehäuse und ein in dem Steckverbinder-Gehäuse angeordnetes Steckverbinder-Kontaktelement, wobei das Steckverbinder-Kontaktelement endseitig entgegen der Steckrichtung einen Steckkontakt-Crimpbereich und endseitig in Steckrichtung einen Steckkontakt-Kontaktbereich aufweist, wobei dem Steckkontakt-Kontaktbereich eine Steckverbinder-Kontaktdichtung angeordnet ist, welche durch einen korrespondierenden Gegensteckverbinder während eines Steckvorgangs verdrängt wird. Ein derartiger Steckverbinder hat den Vorteil, dass er, vergleichen zu einem korrespondierenden Gegensteckverbinder mit Verriegelungsmechanismus, einfach und robust ausführbar ist. Besonders im Bereich von landwirtschaftlichen Umgebungen, baugewerblichen Umgebungen oder vergleichbar rauen Umgebungen kann es von besonderem Vorteil sein, wenn ein Arbeitsgerät, welche mit elektrischem Strom versorgt werden muss, über einen elektrischen Anschluss verfügt, welcher in einfacher Weise ausgeführt ist. Ein entsprechender Gegensteckverbinder kann üblicherweise etwas komplexer aufgebaut werden, da dieser als Anbaugehäuse ausgeführt werden kann und der komplexere Aufbau in einem Generator, einem Traktor, einem LKW, einem Radlader, einem Bagger, oder einer ähnlich robusten Arbeitsmaschine eingebracht werden kann. Daher wird vorgeschlagen, dass der Steckverbinder, wie zuvor in der Beschreibung des Steckverbindersystems beschrieben, mit einer Verriegelungsform versehen ist, während der Gegensteckverbinder einem komplexeren Aufbau, wie einen, zuvor in der Beschreibung des Steckverbindersystems beschriebenen, Verriegelungsmechanismus aufweisend ausgeführt ist.

In einer weiterentwickelten Ausführungsform weist das Steckverbinder-Kontaktelement an oder in dem Steckverbinder-Kontaktbereich eine Steckkontakt-Federaufnahme auf, welche zur Aufnahme einer Steckverbinder-Dichtfeder ausgeformt ist und wobei die Steckverbinder-Kontaktdichtung mit der Steckkontakt-Dichtfeder interagiert. Auf diese Weise wird eine einfache und wirksame Dichtung des Steckverbinders gegenüber Fremdmedien erreicht, wobei die Dichtung, beziehungsweise eine Dichtkappe, in diesem Fall die Steckverbinder-Kontaktdichtung nicht ohne weiteres verloren, beschädigt oder entwendet werden kann. Weiterhin wird durch die Steckverbinder-Dichtfeder die Steckverbinder-Kontaktdichtung in Steckrichtung bewegt, sobald eine Trennung von Gegensteckverbinder und Steckverbinder vorgenommen wird, wodurch eine besonders vorteilhafte, quasi permanente Dichtung des Steckverbinders erreicht wird, sobald der Steckverbinder sich nicht im Einsatz befindet.

Eine weitere Aufgabe wird gelöst durch einen einpoligen Gegensteckverbinder, aufweisend ein Gegensteckverbinder-Gehäuse und ein in dem Gegensteckverbinder-Gehäuse angeordnetem Gegensteckverbinder-Kontaktelement, wobei das Gegensteckverbinder-Kontaktelement endseitig entgegen der Gegensteckrichtung einen Gegensteckkontakt-Crimpbereich und endseitig in Gegensteckrichtung einen Gegensteckkontakt-Kontaktbereich aufweist, wobei dem Gegensteckkontakt-Kontaktbereich eine Gegensteckverbinder-Kontaktdichtung angeordnet ist, welche durch einen korrespondierenden Steckverbinder während eines Steckvorgangs verdrängt wird. Ein derartiger Gegensteckverbinder ist vorteilhafterweise als Anbaugehäuse ausführbar, sodass er, vergleichen zu einem korrespondierenden Steckverbinder mit Verriegelungsform, komplexer ausgeführt sein kann, da der komplexere Aufbau beispielsweise im Inneren eines Generators, eines Traktors, eines LKWs, eines Baggers, eines Radladers oder einer ähnlich robusten Arbeitsmaschine eingebracht werden kann. Es scheint daher besonders sinnvoll, dass der Gegensteckverbinder, wie zuvor in der Beschreibung des Steckverbindersystems beschrieben, mit einem Verriegelungsmechanismus ausgeführt ist, während der Steckverbinder einen robusten und einfachen Aufbau nutzt.

In einer weiterentwickelten Ausführungsform ist das Gegensteckverbinder-Kontaktelement von einer Gegensteckverbinder-Kontaktaufnahme in dem Gegensteckverbinder-Gehäuse gehalten. Die Gegensteckverbinder-Kontaktaufnahme weist eine Gegensteckkontakt-Federaufnahme auf, welche an oder in der Gegensteckverbinder-Kontaktaufnahme ausgeformt und zur Aufnahme einer Gegensteckverbinder-Dichtfeder vorgesehen ist, wobei die Gegensteckverbinder-Kontaktdichtung mit der Gegensteckkontakt-Dichtfeder interagiert. Die Gegensteckverbinder-Kontaktaufnahme kann dabei zur Befestigung des Gegensteckverbinder-Kontaktelements mit dem Gegensteckverbinder-Gehäuse verschraubt werden, wobei das Gegensteckverbinder-Gehäuse einen Anschlag aufweisen kann, um das Gegensteckverbinder-Kontaktelement in einer gewünschten Position zu fixieren. In vorteilhafter Weise ist die Gegensteckverbinder-Kontaktaufnahme mit Rastelementen ausgeführt, welche mit korrespondierenden Rastmittel des Gegensteckverbinder-Gehäuses interagieren oder umgekehrt, sodass das Gegensteckverbinder-Kontaktelement mit einer einfachen Verrastung in dem Gegensteckverbinder-Gehäuse gehalten wird. Dabei wird vorteilhafterweise die Gegensteckverbinder-Kontaktaufnahme mit einem umlaufenden Flansch versehen, welcher zwischen dem Inneren des Gegensteckverbinder-Gehäuses und dem äußeren Umfang der Gegensteckverbinder-Kontaktaufnahme angeordnet ist und so als Gegensteckkontakt-Federaufnahme fungiert. Alternativ bietet sich an, die Gegensteckkontakt-Federaufnahme als konzentrische, umlaufende Nut in eine äußere Ausformung der Gegensteckverbinder-Kontaktaufnahme auszuformen, in welche sich die Gegensteckverbinder-Dichtfeder fügt.

Weiterhin wird ein Verfahren zur Herstellung einer Steckverbindung offenbart, wobei ein Steckverbindersystem einen Steckverbinder mit einer Steckverbinder-Kontaktdichtung aufweist und wobei ein Gegensteckverbinder eine Gegensteckverbinder-Kontaktdichtung aufweist. Dabei verdrängt der Steckverbinder während eines Steckvorgangs eine Gegensteckverbinder-Kontaktdichtung, wobei der Gegensteckverbinder während eines Steckvorgangs eine Steckverbinder-Kontaktdichtung verdrängt, wobei die verdrängte Steckverbinder-Kontaktdichtung ein Steckverbinder-Kontaktelement freigibt und wobei die verdrängte Gegensteckverbinder-Kontaktdichtung ein Gegensteckverbinder-Kontaktelement freigibt.

Eine Lösung einer weiteren Aufgabe der Erfindung sieht ein einpoliges Steckverbindersystem bestehend aus einem Steckverbinder und einem Gegensteckverbinder vor, wobei der Steckverbinder ein Steckverbinder-Gehäuse, eine Steckverbinder-Kontaktdichtung und ein Steckverbinder-Kontaktelement aufweist, und wobei der Gegensteckverbinder ein Gegensteckverbinder-Gehäuse, eine Gegensteckverbinder-Kontaktdichtung, einen Gegensteckverbinder-Berührschutz und ein Gegensteckverbinder-Kontaktelement aufweist. Dabei weist der Steckverbinder eine Verriegelungsform auf und der Gegensteckverbinder einen Verriegelungsmechanismus aufweist, wobei der Verriegelungsmechanismus mit der Verriegelungsform interagiert und wobei der Verriegelungsmechanismus durch eine Betätigungsdruck in Steckrichtung betätigt wird, wobei der Betätigungsdruck den Verriegelungsmechanismus mit der Verriegelungsform in Eingriff bringt, wodurch der Steckverbinder mit dem Gegensteckverbinder in elektrisch leitender Verbindung verriegelt wird und wobei ein Lösedruck in Steckrichtung den Verriegelungsmechanismus von der Verriegelungsform löst. Selbstverständlich kann der Gegensteckverbinder mit einer Verriegelungsform versehen sein, während der Steckverbinder mit einem Verriegelungsmechanismus ausgestattet sein kann. Mit anderen Worten, die Begriffe "Steckverbinder" und "Gegensteckverbinder" können im Wesentlichen Synonym angewandt werden und dienen vorrangig der verbesserten Lesbarkeit.

Der Begriff "Verriegelungsform" meint ein Formelement an dem Steckverbinder, welches dazu ausgelegt ist, mit einem Verriegelungsmechanismus in Eingriff gebracht zu werden, um eine Verbindung zwischen einem Steckverbinder mit einem Gegensteckverbinder gegen unbeabsichtigtes Lösen der Verbindung zu sichern. Als Verriegelungsformen sind insbesondere Nuten, Federn, Rastnasen, Rasthaken, Bolzen, Bajonettverriegelungsnuten, Bajonettverriegelungsbolzen, Nocken, Kurvenbahnen, Fortsätze, oder Kombinationen der genannten Optionen. Andere Formen sind dem geneigten Fachmann bekannt und können sicherlich übertragen werden. Besonders bevorzugt ist eine als umlaufende Nut ausgeführte Verriegelungsform.

Als "Verriegelungsmechanismus" ist grundsätzlich jede Art von Vorrichtung denkbar, welche mit zuvor beschriebenen Verriegelungsformen in Eingriff bringbar ist, sodass ein Steckverbinder und ein Gegensteckverbinder miteinander in gesteckter Position gegen versehentliches Trennen der elektrischen Verbindung sichert.

Als "Betätigungsdruck" ist ein Steckvorgang gemeint, welcher vorzugsweise bis zu einem physischen Anschlag erfolgt. Der physische Anschlag kann dabei durch die Begrenzung eines Federwegs einer Steckverbinder-Dichtfeder, oder einer Gegensteckverbinder-Dichtfeder, oder beider darstellen. Der Betätigungsdruck ist also eine Druckbewegung bei einem Steckvorgang bis zu einem Anschlag, wobei der Verriegelungsmechanismus in eine Verriegelungsform eingreift.

Als "Lösedruck" ist ein Trennvorgang gemeint, also einem erneuten, zweiten Druck, vorzugsweise bis zu einem physischen Anschlag. Eine Mechanik in dem Verriegelungsmechanismus wird durch den Lösedruck von einer sperrenden Stellung in eine geöffnete Stellung umgestellt, sodass der Verriegelungsmechanismus nicht mehr fixierend in die Verriegelungsform eingreift. Nach diesem Lösedruck können Steckverbinder und Gegensteckverbinder durch einfache Zugbewegung entgegen der Steckrichtung voneinander getrennt werden. Verriegelungsmechanismen, welche bei einem ersten Druck in Steckrichtung, also einem Betätigungsdruck, verriegeln und bei einem zweiten Druck in Steckrichtung, also einem Lösedruck die Verriegelung wieder lösen, werden auch als "Push-Push-Verriegelung" bezeichnet.

In einer weiterentwickelten Ausführungsform weist der Verriegelungsmechanismus einen Verriegelungswechsler, ein Verriegelungsgehäuse, einen Rotationsanschlag und eine Verriegelungsfeder auf.

Als "Verriegelungswechsler" ist ein Teil des Verriegelungsmechanismus gemeint, welcher in Kombination mit dem Verriegelungsgehäuse einen Wechsel zwischen verriegeltem und geöffnetem Verriegelungsmechanismus ermöglicht. Dazu wird vorgeschlagen, den Verriegelungswechsler als starres, also nicht rotatorisches bewegbares Element, beispielsweise als hülsenförmiges, also im Wesentlichen hohlzylindrisches Bauteil auszuführen, welche vorzugsweise in einem übergenordneten Gehäuse angeordnet ist. Das Verriegelungsgehäuse stößt an dem Verriegelungswechsler an, oder greift in den Verriegelungswechsler ein, oder durchdringt diesen, oder eine Kombination von beidem.

Der "Rotationsanschlag" wird im wesentlich vergleichbar des Verriegelungswechslers als hohlzylindrisches, starres, also nicht rotatorisch bewegbares Element, auszuführen, welches vorzugsweise in einem übergeordneten Gehäuse angeordnet ist.

In einer sinnvollen Ausführungsform weist der Verriegelungswechsler eine Wechselverzahnung auf und das Verriegelungsgehäuse weist eine zu der Wechselverzahnung korrespondierende Gehäuse-Wechselverzahnung auf, wobei eine Verriegelungsfeder das Verriegelungsgehäuse in Richtung des Verriegelungswechslers zwingt. Vorzugsweise werden die Wechselverzahnung und die Gehäuse-Wechselverzahnung parallel zur Mittelachse des Gegensteckverbinders, also die Verzahnung je stirnseitig in Längsrichtung weisend, ausgeführt.

In einer weiteren Ausführungsform weist der Rotationsanschlag eine Rotationsverzahnung auf und das Verriegelungsgehäuse weist eine zu der Rotationsverzahnung korrespondierende Gehäuse-Rotationsverzahnung auf, wobei eine Druckbewegung entgegen der Verriegelungsfeder die Rotationsverzahnung mit der Gehäuse-Rotationsverzahnung derart in Eingriff bringt, dass das Verriegelungsgehäuse zu einer Teilrotation gezwungen wird. Die Teilrotation ist durch eine Zahnbreite der Rotationsverzahnung oder der Gehäuse-Rotationsverzahnung oder beiden vorgegeben. Vorzugsweise werden die Rotationsverzahnung und die Gehäuse-Rotationsverzahnung parallel zur Mittelachse des Gegensteckverbinders, also die Verzahnung je stirnseitig in Längsrichtung weisend, ausgeführt.

Eine weiterentwickelte Ausführungsform schlägt vor, dass das Verriegelungsgehäuse einen Federanschlag aufweist, an welchem die Verriegelungsfeder angreift, sodass das Verriegelungsgehäuse in Richtung des Verriegelungswechslers gezwungen wird. Erfindungsgemäß wird durch ein erstes Stecken von Steckverbinder und Gegensteckverbinder also ein Verriegelungsgehäuse von einem Verriegelungswechsler entfernt. Dabei greifen die Gehäuse-Rotationsverzahnung und die Rotationsverzahnung derart miteinander ein, dass eine Teilrotation des Verriegelungsgehäuses erzwungen wird. Durch diese Teilrotation gelangen Wechselverzahnung und Gehäuse Wechselverzahnung in zueinander versetzter Ausrichtung. Führt die Verriegelungsfeder nun die Wechselverzahnung und die Gehäuse-Wechselverzahnung wieder zusammen, greifen die Verzahnungen derart ineinander, dass eine vollständige Wechselrotation erfolgt.

Weiterhin schlägt eine Ausführungsform vor, dass dem Verriegelungswechsler ein Verriegelungskäfig zugeordnet ist, welcher bei Wechselrotation des Verriegelungsgehäuses in dem Verriegelungskäfig befindliche Verriegelungselemente alternierend in eine Verriegelungsform zwingt und wieder freigibt. Als Verriegelungskäfig ist sowohl ein einzelnes Bauteil zu verstehen, wie auch eine Baugruppe bestehend aus mehreren, im Wesentlichen voneinander getrennten Bauteilen, welche gemeinsam die Funktion erfüllen.

Ein weiteres Verfahren sieht vor, dass ein Steckverbinder mit einer Verriegelungsform versehen ist und der Gegensteckverbinder mit einer Verriegelungsmechanik ausgerüstet ist, wobei die Verriegelungsmechanik durch einen ersten Betätigungsdruck in Steckrichtung oder Gegensteckrichtung mit der Verriegelungsform in Eingriff gebracht wird, also den Steckverbinder elektrisch kontaktierend im Gegensteckverbinder sichert und durch einen zweiten Betätigungsdruck in Steckrichtung oder Gegensteckrichtung die Verriegelungsform durch die Verriegelungsmechanik frei gibt, sodass der Steckverbinder vom Gegensteckverbinder entfernbar ist.

Eine weiterentwickelte Ausführungsform eröffnet ein einpoliges Steckverbindersystem, aufweisend einen Steckverbinder und einen Gegensteckverbinder, wobei dem Steckverbindersystem eine Verriegelungsmechanik angeordnet ist und wobei der Verriegelungsmechanik eine Abreiß-Sicherung zugeordnet ist, welche ein Lösen der Verriegelungsmechanik bei mechanischer Überbelastung, insbesondere durch Zug entgegen der Steckrichtung, ermöglicht.

Die Abreiß-Sicherung löst in einer Ausführungsform den Verriegelungsmechanismus des Steckverbindersystems bei einem Aufkommen von mechanischer Überbelastung derart, dass Steckverbinder und Gegensteckverbinder im Wesentlichen funktionsfähig für weitere Nutzung voneinander getrennt werden. Idealerweise verstellt dabei die ausgelöste Abreiß-Sicherung den Verriegelungsmechanismus derart, dass ein erneuter Steckvorgang ohne weitere Vorbereitung und/oder Rückstellung des Verriegelungsmechanismus möglich ist.

In geschickter Weise schlägt eine Ausführungsform vor, dass die Abreiß-Sicherung einen Sicherungs-Kraftspeicher, insbesondere als Federelement ausgeführt, aufweist. Die Abreiß-Sicherung erlaubt einem Verriegelungskäfig ein Ausweichen aus dem Verriegelungsgehäuse und/oder dem Verriegelungswechsler in Ausweich-Richtung, wobei die Verriegelungselemente eine Verriegelungsform freigeben und so eine Trennung von Steckverbinder und Gegensteckverbinder erlaubt.

Durch eine Ausführungsform wird vorgeschlagen, dass die Abreiß-Sicherung am steckseitigen Ende des Verriegelungsmechanismus eine Freigabe-Hülse aufweist, welche den Verriegelungskäfig in vorgesehener Position an dem Verriegelungsmechanismus fixiert und mit einem Sicherungs-Kraftspeicher in dieser Position gehalten ist.

Eine weiterentwickelte Ausführungsform sieht vor, dass der Sicherungs-Kraftspeicher mit einer Sicherungs-Kalibrierung in seiner Auslösekraft eingestellt werden kann. Dazu ist die Sicherungs-Kalibrierung im Wesentlichen als Flansch mit Innengenwinde ausgeführt, ist an einem kabelseitigen Ende des Verriegelungsmechanismus angeordnet und ist durch das Innengenwinde in seiner Position entlang dem Verriegelungsmechanismus durch ein daran befindliches Außengewinde veränderbar.

Vorzugsweise sieht dabei eine Ausführungsform vor, dass der Sicherungs-Kraftspeicher zwischen der Freigabe-Hülse und dem Verriegelungsgehäuse angeordnet und als umlaufende Feder ausgeführt ist. Diese Ausführung eröffnet somit den Einsatz einen sicheren, aber kosteneffektiven und robusten Möglichkeit zur flexiblen Ausführung der erfindungsgemäßen Abreiß-Sicherung.

Alternativ wird vorgeschlagen, dass in einer Ausführungsform der Sicherungs-Kraftspeicher als umlaufender Spiralfederring ausgeführt ist, in einer ersten Nut im Verriegelungsmechanismus angeordnet ist und in eine korrespondierende zweite Nut in der Freigabehülse eingreift. Dazu lassen sich in geschickter Weise schräg verlaufende Spiralfedern einsetzen, welche im Stand der Technik auch als BalSeal-Feder bekannt sind. Der als Spiralfederring ausgeführte Sicherungs-Kraftspeicher verformt sich bei definierter Zugbelastung entgegen der Ausweich-Richtung und gibt so die Freigabe-Hülse in Steckrichtung frei.

Vorteilhafte Ausgestaltungen der Erfindung sind in den Unteransprüchen und der folgenden Beschreibung angegeben.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines Steckverbinders;
- Fig. 2: eine perspektivische Darstellung eines Gegensteckverbinders;
- Fig. 3: eine Schnittdarstellung entlang der Längsachse eines Steckverbindersystems;
- Fig. 4: eine Schnittdarstellung entlang der Längsachse eines gesteckten Steckverbindersystems;
- Fig. 5: eine seitliche Darstellung eines Steckverbindersystems mit Verriegelungsmechanismus in Ausgangsposition;
- Fig. 6: eine seitliche Darstellung eines Steckverbindersystems mit Verriegelungsmechanismus in gesteckter Position;
- Fig. 7: eine perspektivische Schnittdarstellung entlang der Längsachse eines Steckverbindersystems mit Abreiß-Sicherung im verriegelten Zustand;
- Fig. 8: eine perspektivische Schnittdarstellung entlang der Längsachse eines Steckverbindersystems mit Abreiß-Sicherung während eines Abreiß-Lösevorgangs.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

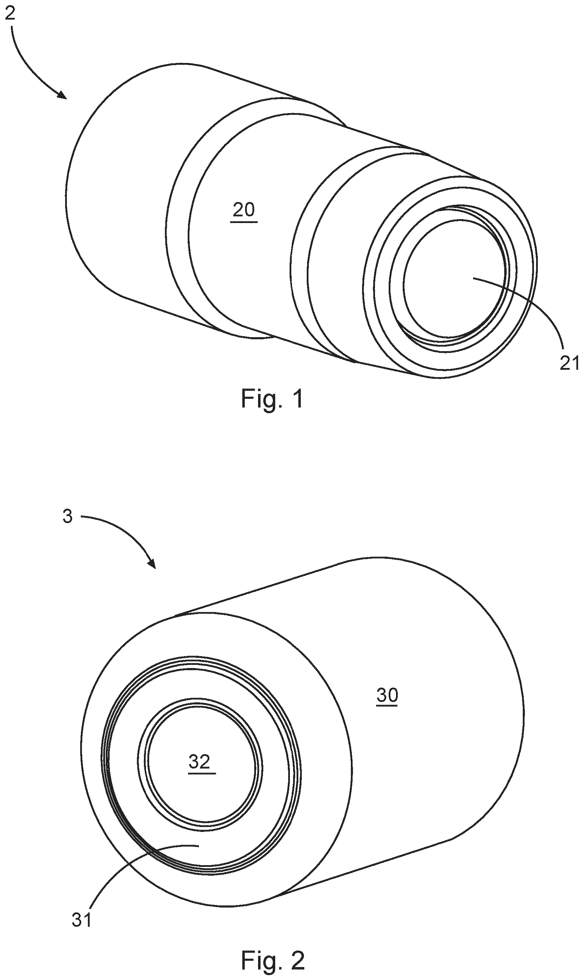

Die Figur 1 zeigt einen erfindungsgemäßen Steckverbinder 2, in einer besonders einfachen Ausführungsform. In der Darstellung sind ein Steckverbinder-Gehäuse 20, sowie eine an der steckseitigen Stirnseite angeordnete Steckverbinder-Kontaktdichtung 21 zu erkennen.

Die Figur 2 zeit einen erfindungsgemäßen Gegensteckverbinder 3 in einer zum Steckverbinder 2 korrespondierenden, besonders einfach Ausführung. Die Darstellung zeigt ein Gegensteckverbinder-Gehäuse 30, eine an der gegensteckseitigen Stirnseite angeordnete Gegensteckverbinder-Kontaktdichtung 31 und eine in der konzentrisch ringförmigen Gegensteckverbinder-Kontaktdichtung 31 einen Gegensteckverbinder-Berührschutz 32.

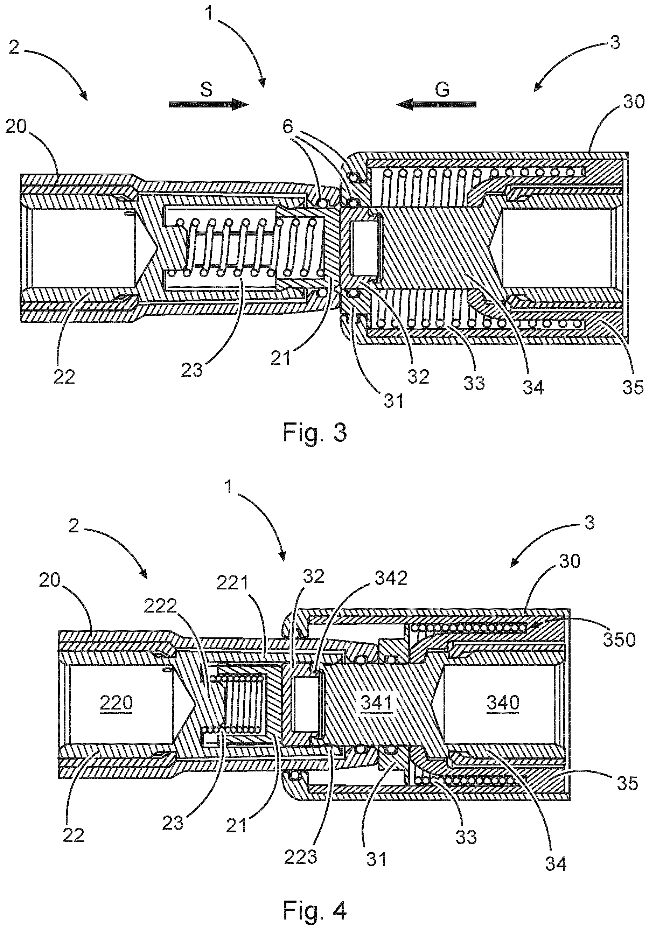

In der Figur 3 ist ein Längsschnitt eines erfindungsgemäßen Steckverbindersystems 1 gezeigt, wobei die Aufbauten des Steckverbinders 2, sowie des Gegensteckverbinders 3 verdeutlicht werden. Hierbei wird zunächst ein ungesteckter Zustand von Steckverbinder 2 und Gegensteckverbinder 3 gezeigt, wobei der Steckverbinder 2 derart an dem Gegensteckverbinder 3 angelegt ist, dass ein Steckvorgang erfolgen kann. Dabei wird die steckseitige Stirnseite des Steckverbinders 2 an die gegensteckseitige Stirnseite des Gegensteckverbinders 3 geführt, sodass die Steckverbinder-Kontaktdichtung 21 dem Gegensteckverbinder-Berührschutz 32 gegenüber liegt. Die Stirnseite des Steckverbinder-Gehäuses 20 stößt hierbei gegen die Gegensteckverbinder-Kontaktdichtung 31. Weiterhin ist ein Gegensteckverbinder-Kontaktelement 34 mit einem Gegensteckverbinder-Berührschutz 32 versehen, welcher gegensteckseitig mit dem Gegensteckverbinder-Gehäuse 30 im Wesentlichen bündig abschließt. Hierbei wird deutlich, dass der Gegensteckverbinder-Berührschutz 32 mit der Steckverbinder-Kontaktdichtung 21 derart übereinstimmt, dass der Gegensteckverbinder-Berührschutz 32 bei einem Steckvorgang dazu ausgelegt ist, die Steckverbinder-Kontaktdichtung 21 in Gegensteckrichtung G gegen eine Federkraft der Steckverbinder-Dichtfeder 23 zu verdrängen. In ähnlicher Weise ist das Steckverbinder-Gehäuse 20 dazu ausgelegt, die konzentrische Gegensteckverbinder-Kontaktdichtung 31 in Steckrichtung S entgegen einer von einer Gegensteckverbindung-Dichtfeder 33 aufgebrachten Kraft zu verdrängen. Weiterhin wird ein einfacher Aufbau eines erfindungsgemäßen Steckverbinders 2 verdeutlicht. Innerhalb des Steckverbinder-Gehäuses 20 sind eine federgelagerte Steckverbinder-Kontaktdichtung 21, ein Steckverbinder-Kontaktelement 22 und eine in dem Steckverbinder-Kontaktelement 22 angeordnete, mit der Steckverbinder-Kontaktdichtung 21 interagierende Steckverbinder-Dichtfeder 23 angeordnet. Dabei zwingt eine Steckverbinder-Dichtfeder 23 das Steckverbinder-Dichtelement 21 in Steckrichtung S, sodass es in etwa bündig mit dem Steckverbinder-Gehäuse 20 stirnseitig abschließt. Dabei wird vorgeschlagen, ein Dichtelement 6 in einer dafür vorgesehenen Form und/ oder Ausnehmung in dem steckseitigen Ende des Steckverbinder-Gehäuses 20 vorzusehen. Das Dichtelement 6 dichtet im dargestellten, nicht gesteckten Zustand das Innere des Steckverbinder-Gehäuses 20 und somit das Steckverbinder-Kontaktelement 22 gegen Fremdmedien ab. Das Dichtelement 6 kann als einfacher O-Ring ausgeführt sein. Bevorzugt ist das Dichtelement als Lamellendichtung, beziehungsweise Lamellendichtring ausgeführt, wobei die Lamellen in Richtung der Steckverbinder-Kontaktdichtung 21 weisen. Ebenso wird der einfache Aufbau des Gegensteckverbinders 3 offenbart. Das Gegensteckverbindergehäuse 30 nimmt dabei zumindest eine Gegensteckverbinder-Kontaktdichtung 31 auf, welche gegensteckseitig in etwa bündig mit dem Gegensteckverbinder-Gehäuse 30, und ebenso in etwa bündig mit einem Gegensteckverbinder-Berührschutz 32 abschließt. Dabei wird die Gegensteckverbinder-Kontaktdichtung 31 durch eine Gegensteckverbinder-Dichtfeder 33 in Gegensteckrichtung G geschoben, wo zumindest ein Dichtelement 6 in einer dafür vorgesehenen Form in dem Gegensteckverbinder-Gehäuse 30 inwärts gerichtet die Gegensteckverbinder-Kontaktdichtung 31 im ungesteckten Zustand gegen Fremdmedien abdichtet. Weiterhin wird vorgeschlagen, dass die Gegensteckverbinder-Kontaktdichtung 31 mit einem nach innen, in Richtung des Gegensteckverbinder-Berührschutzes 32 weisenden Dichtelement 6 ausgestattet ist. Alternativ wird vorgeschlagen, dass der Gegensteckverbinder-Berührschutz 32 ein nach außen gerichtetes Dichtelement 6 aufweist. Die Gegensteckverbinder-Dichtfeder 33, sowie ein Gegensteckverbinder-Kontaktelement 34 sind durch eine Gegensteckverbinder-Kontaktaufnahme 35 in dem Gegensteckverbinder-Gehäuse 30 gehalten.

In der Figur 4 ist ein Längsschnitt eines erfindungsgemäßen Steckverbindersystems 1 gezeigt, wobei die Aufbauten des Steckverbinders 2, sowie des Gegensteckverbinders 3 in einem miteinander gesteckten Zustand verdeutlicht werden. Hierbei wird deutlich, wie ein Steckverbinder 2 in einem Gegensteckverbinder 3 in Eingriff gelangt. Weiterhin wird deutlich, wie das Steckverbinder-Kontaktelement 22 erfindungsgemäß mit dem Gegensteckverbinder-Kontaktelement 34 in elektrisch leitende Verbindung gebracht wird. Ein elektrischer Leiter, üblicherweise ein Kabel, wird in einen Steckkontakt-Crimpbereich 220 eingebracht, und dort verpresst, beziehungsweise vercrimpt. In Steckrichtung S endseitig angeordnet weist das Steckverbinder-Kontaktelement 22 einen Steckkontakt-Kontaktbereich 221 auf, welcher dazu ausgelegt ist, mit einem Gegensteckverbinder-Kontaktelement 34 verbindbar ausgeführt ist. Die gezeigte Ausführung zeigt das Steckverbinder-Kontaktelement 22 als Buchsenkontakt, der Steckkontakt-Kontaktbereich 221 ist also im wesentlich hohlzylindrisch ausgeführt. Endseitig in Steckrichtung S weisend ist der Steckkontakt-Kontaktbereich 221 mit einer Steckkontakt-Kontaktform 223 versehen. Die gezeigte Ausführung sieht eine in Richtung Längsachse weisende Wulst vor, welche das Gegensteckverbinder-Kontaktelement 34 verbessert kontaktiert. Innerhalb des als Hohlzylinder ausgeformten Steckkontakt-Kontaktbereich 221 befindet sich eine Steckkontakt-Federaufnahme 222. Die Steckkontakt-Federaufnahme 222 ist zur Aufnahme der Steckverbinder-Dichtfeder 23 ausgelegt. In einfacher Weise kann die Steckkontakt-Federaufnahme 222 als bolzenähnlicher Fortsatz ausgeführt sein. Dabei entspricht der Außendurchmesser des Fortsatzes in geschickter Weise dem Innendurchmesser der Steckerbinder-Dichtfeder 23. Alternativ kann die Steckkontakt-Federaufnahme 222 als konzentrische Nut ausgeführt sein, in welche sich die Steckverbinder-Dichtfeder 23 fügt, beziehungsweise einbringen lässt. Innerhalb des Gegensteckverbinders 3 wird das Gegensteckverbinder-Kontaktelement 34 durch eine Ausnehmung, beziehungsweise eine Halteform in dem Gegensteckverbinder-Gehäuse 30 gehalten. Die Gegensteckverbinder-Kontaktaufnahme 35 weist dabei weiterhin eine Gegensteckkontakt-Federaufnahme 350 auf. Entgegen der Gegensteckrichtung G weisend ist das Gegensteckverbinder-Kontaktelement 34 mit einem Gegensteckkontakt-Crimpbereich 340 ausgeführt, in welches ein elektrischer Leiter, insbesondere ein Kabel eingebracht, und darin verpresst, beziehungsweise vercrimpt wird. Weiterhin weist das Gegensteckverbinder-Kontaktelement 34 einen Gegensteckkontakt-Kontaktbereich 341 auf. Der Gegensteckkontakt-Kontaktbereich 341 ist dabei im Wesentlichen als Stiftkontakt ausgeführt, welcher sich in das als Buchsenkontakt ausgeführte Steckverbinder-Kontaktelement 22 einbringen lässt. Das Gegensteckverbinder-Kontaktelement 34 schließt in Gegensteckrichtung G weisend mit einem Gegensteckverbinder-Berührschutz 32 ab, welches durch eine Gegensteckkontakt-Berührschutzaufnahme 342 an dem Gegensteckverbinder-Kontaktelement 34 gehalten ist. Die Gegensteckkontakt-Berührschutzaufnahme 342 ist dabei in einer Ausführungsform als Gewinde ausgeführt, welche mit einem korrespondierenden Gewinde des Berührschutzes 32 interagiert. Bevorzugt wird die Gegensteckkontakt-Berührschutzaufnahme 342 als Rastelement und/oder Rastwulst ausgeführt, in welche der Gegensteckverbinder-Berührschutz 32 eingerastet und/oder eingepresst, beziehungsweise aufgepresst werden kann.

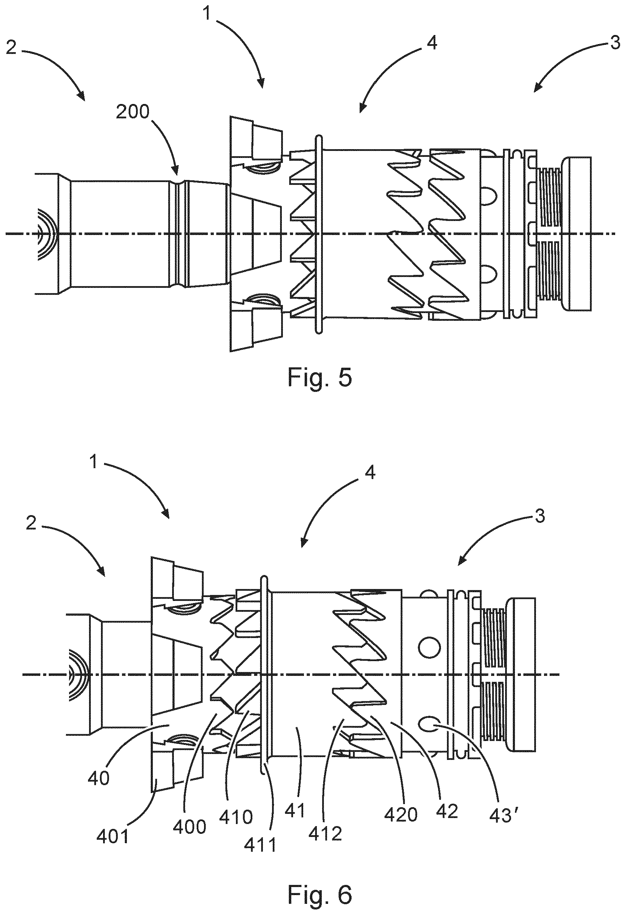

Die Figur 5 zeigt ein Steckverbindersystem 1 aufweisend einen Steckverbinder 2 und einen Gegensteckverbinder 3, wobei der Gegensteckerbinder 3 weiterhin eine Verriegelungsmechanismus 4 aufweist, welcher in eine an dem Steckverbinder 2 angeformten Verriegelungsform 200 verriegelnd eingreifen kann. Hierbei wird ein nicht verriegelter, nicht gesteckter Zustand des Steckverbindersystems 2 gezeigt.

In der Figur 6 wird die Funktionsweise des Verriegelungsmechanismus 4 näher verdeutlicht. Der Steckverbinder 2 ist in den Gegensteckverbinder 3 eingebracht, wodurch ein Verriegelungsgehäuse 41 in Steckrichtung S von einem Verriegelungswechsler 40 weg geführt wird. Das Verriegelungsgehäuse 41 wird in die Richtung eines Rotationsanschlags 43 geführt. Dadurch wird eine Gehäuse-Wechselverzahnung 410 aus einer Wechselverzahnung 400 entfernt. Währenddessen wird eine Gehäuse-Rotationsverzahnung 412 mit einer Rotationsverzahnung 420 in eingriff gebracht. Durch die zueinander versetzte Anordnung und Ausgestaltung der Wechselverzahnung 400, der Gehäuse-Wechselverzahnung 410, der Gehäuse-Rotationsverzahnung 412 und der Rotationsverzahnung 420 wird das Verriegelungsgehäuse 41 derart rotiert, dass in dem Verriegelungswechsler 40 angeordnete Verriegelungselemente 43 mit einem Verriegelungskäfig 401 in Eingriff gebracht werden. Dadurch kann der Steckverbinder 2 nicht mehr ungewollt von dem Gegensteckverbinder 3 getrennt werden. Bei erneutem Druck des Steckverbinders 2 in Steckrichtung S wird diese Rotationsbewegung erneut durchgeführt, sodass die Verriegelungselemente 43 nicht mehr mit dem Verriegelungskäfig 401 in Eingriff stehen, sodass der Steckverbinder 2 von dem Gegensteckverbinder 3 getrennt werden kann. Damit das Verriegelungsgehäuse 41 nach einer Druckbewegung in Steckrichtung S zurück gegen den Verriegelungswechsler 40 bewegt werden kann, weist das Verriegelungsgehäuse 41 einen Federanschlag 411 auf. An diesen Federanschlag 411 kann eine Verriegelungsfeder 44 angreifen, um das Verriegelungsgehäuse 41 in Gegensteckrichtung G gegen den Verriegelungswechsler 40 zu zwingen. In geschickter Weise sind die Gehäuse-Rotationsverzahnung 412 und die Rotationsverzahnung 420 derart ausgestaltet, dass bei vollem Eingriff eine halbe Verriegelungsrotation ausgeführt wird, während die Gehäuse-Wechselverzahnung 410 und die Wechselverzahnung 400 diese halbe Verriegelungsrotation vervollständigen. Als Verriegelungsrotation ist hierbei die Rotation des Verriegelungsgehäuses 41 gemeint, welche notwendig ist, um die Verriegelungselemente 43 mit einem Verriegelungskäfig 401 in Eingriff zu bringen und/oder diesen Eingriff zu lösen.

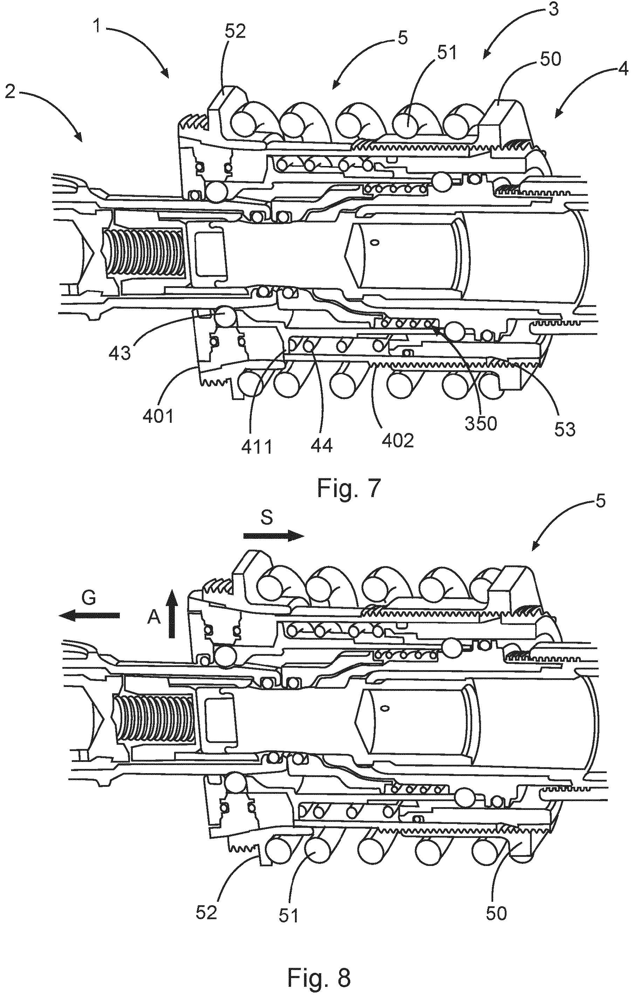

Eine clevere Ausführungsform wird in den Figuren 7 und 8 verdeutlicht. Dabei wird ein Steckverbindersystem 1 mit einer Abreiß-Sicherung 5 versehen. Diese Abreiß-Sicherung 5 soll ermöglichen, dass bei mechanischer Überbelastung, insbesondere durch Zug an einem angeschlossenen Kabel oder Kabelstrang, der Verriegelungsmechanismus 4 die Verriegelung von Steckverbinder 2 und Gegensteckverbinder 3 lösen kann, bevor der Steckverbinder 2 oder der Gegensteckverbinder 3 oder das Kabel, beziehungsweise der Kabelstrang (möglicherweise dauerhaft) beschädigt wird. Dabei wird vorgeschlagen, dass die Abreiß-Sicherung 5 mit einer Sicherungs-Kalibrierung 50, einem Sicherungs-Kraftspeicher 51 und einer Freigabe-Hülse 52 ausgeführt wird. Dabei wird die Freigabe-Hülse 52 vorzugsweise in der Gehäusewand einer Arbeitsmaschine eingebracht. In der Figur 5 und Figur 6 ist die Freigabe-Hülse 52 mit einem Außengewinde ausgeführt, welches mit dieser Gehäusewand der Arbeitsmaschine in Eingriff bringbar ist. Die Freigabe-Hülse 52 und die Sicherungs-Kalibrierung 50 weisen darstellungsgemäß je einen Flansch und oder Formen auf, welche es ermöglichen, mit dem Sicherungs-Kraftspeicher 51 in Eingriff zu bleiben. In einer geschickten Ausführungsform weist die Sicherungs-Kalibrierung 50 ein Innengewinde 53 auf, welches mit einem Außengewinde 402 des Verriegelungsmechanismus 4 interagiert, sodass die Speichergröße des eingesetzten Sicherungs-Kraftspeichers 51 eingestellt werden kann. Damit ist gemeint, der als Spiralfeder ausgeführte Kraftspeicher 51, lässt sich durch die Sicherungs-Kalibrierung 50 in seiner Federkraft derart einstellen, dass die Abreiß-Sicherung 5 bei gewünschter, eingestellter Kraft auslöst. Als Auslösen ist gemeint, dass der mit dem Gegensteckverbinder 3 verriegelt verbundene Steckverbinder 2 unter Zugbelastung in Gegensteckrichtung G den Gegensteckverbinder 3 mitsamt dem Verriegelungsmechanismus 4 aus der Ausreiß-Sicherung 5 entrückt. Durch die Entfernung des Verriegelungskäfigs 401 aus der, den Verriegelungskäfig 401 fixierenden Freigabe-Hülse 52, kann der Verriegelungskäfig in Ausweich-Richtung A ausweichen. Vorzugsweise wird das Ausweichen durch eine Formsicherung oder elastisch begrenzt, um einem Verlust des Verriegelungskäfigs 401 vorzubeugen. Durch das Ausweichen, beispielsweise als Dehnung elastischer Bestandteile, wird das Verriegelungselement 43 freigegeben, sodass die Verriegelungsform 200 des Steckverbinders 2 frei wird. Anders ausgedrückt, greift das Verriegelungselement 43 nicht mehr in der Verriegelungsform 200 ein. Durch die zugrundeliegende Zugbewegung in Gegensteckrichtung G wird der Steckverbinder 2 aus dem Gegensteckverbinder 3 gelöst. Anschließend zwingt der Sicherungs-Kraftspeichers 51 durch Druck in Steckrichtung S auf ein Anschlagelement, beispielsweise einen Flansch an der Sicherungs-Kalibrierung 50 den Gegensteckverbinder 3 zurück in die vorbestimmte Position, wodurch die Freigabe-Hülse 52 den Verriegelungskäfig 401 und das darunter angeordneten Verriegelungselement 43 wieder in die ursprüngliche, Position verbringt. Geschickter Weise wird vorgeschlagen, dass die Verriegelungselemente 43 in eine nicht verrastende Position verbracht werden, sodass der Gegensteckverbinder 3, sowie der Verriegelungsmechanismus 4 sich wieder in Ausgangsstellung befinden und so für einen neuen Steckvorgang bereit sind.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Steckverbindersystem

- 2: Steckverbinder
- 20: Steckverbinder-Gehäuse
- 21: Steckverbinder-Kontaktdichtung
- 22: Steckverbinder-Kontaktelement
- 23: Steckverbinder-Dichtfeder
- 24: Steckverbinder-Kontaktaufnahme
- 200: Verriegelungsform
- 220: Steckkontakt-Crimpbereich
- 221: Steckkontakt-Kontaktbereich
- 222: Steckkontakt-Federaufnahme
- 223: Steckkontakt-Kontaktform

- 3: Gegensteckverbinder
- 30: Gegensteckverbinder-Gehäuse
- 31: Gegensteckverbinder-Kontaktdichtung
- 32: Gegensteckverbinder-Berührschutz
- 33: Gegensteckverbinder-Dichtfeder
- 34: Gegensteckverbinder-Kontaktelement
- 35: Gegensteckverbinder-Kontaktaufnahme
- 340: Gegensteckkontakt-Crimpbereich
- 341: Gegensteckkontakt-Kontaktbereich
- 342: Gegensteckkontakt-Berührschutzaufnahme
- 350: Gegensteckkontakt-Federaufnahme

- 4: Verriegelungsmechanismus
- 40: Verriegelungswechsler
- 400: Wechselverzahnung
- 401: Verriegelungskäfig
- 402: Außengewinde
- 41: Verriegelungsgehäuse
- 410: Gehäuse-Wechselverzahnung
- 411: Federanschlag
- 412: Gehäuse-Rotationsverzahnung
- 42: Rotationsanschlag
- 420: Rotationsverzahnung
- 43: Verriegelungselement
- 44: Verriegelungsfeder

- 5: Abreiß-Sicherung
- 50: Sicherungs-Kalibrierung
- 51: Sicherungs-Kraftspeicher
- 52: Freigabe-Hülse
- 53: Innengewinde

- 6: Dichtelement

- A: Ausweich-Richtung
- S: Steckrichtung Steckverbinder
- G: Steckrichtung Gegensteckverbinder

## Patentansprüche

1. Einpoliges Steckverbindersystem (1) bestehend aus einem Steckverbinder (2) und einem Gegensteckverbinder (3),
wobei der Steckverbinder ein Steckverbinder-Gehäuse (20), eine Steckverbinder-Kontaktdichtung (21) und ein Steckverbinder-Kontaktelement (22) aufweist, und
wobei der Gegensteckverbinder (3) ein Gegensteckverbinder-Gehäuse (30), eine Gegensteckverbinder-Kontaktdichtung (31), einen Gegensteckverbinder-Berührschutz (32) und ein Gegensteckverbinder-Kontaktelement (34) aufweist,
**dadurch gekennzeichnet, dass**
die Steckverbinder-Kontaktdichtung (21) mit einer Steckverbinder-Dichtfeder (23) in funktionalem Eingriff steht, sodass die Steckverbinder-Kontaktdichtung (21) in Steckrichtung (S) entgegen einer Kraft der Steckverbinder-Dichtfeder (23) verlagerbar innerhalb des Steckverbinder-Gehäuses (20) angeordnet ist
**und dass**
die Gegensteckverbinder-Kontaktdichtung (31) mit einer Gegensteckverbinder-Dichtfeder (33) in funktionalem Eingriff steht, sodass die Gegensteckverbinder-Kontaktdichtung (31) in Gegensteckrichtung (G) entgegen einer Kraft der Gegensteckverbinder-Dichtfeder (33) verlagerbar innerhalb des Gegensteckverbinder-Gehäuses (30) angeordnet ist.

2. Steckverbindersystem (1) nach Anspruch 1,
**dadurch gekennzeichnet, dass**
das Steckverbinder-Kontaktelement (22) einen hohlzylindrischen Steckkontakt-Crimpbereich (220), einen im wesentlichen hohlzylindrischen Steckkontakt-Kontaktbereich (221) und innerhalb des Steckkontakt-Kontaktbereichs (221) eine Steckkontakt-Federaufnahme (222) aufweist.

3. Steckverbindersystem (1) nach Anspruch 1,
**dadurch gekennzeichnet, dass**
das Steckverbinder-Kontaktelement (22) einen hohlzylindrischen Steckkontakt-Crimpbereich (220), einen im wesentlichen zylindrischen Steckkontakt-Kontaktbereich und außerhalbhalb des Steckkontakt-Kontaktbereichs (221) eine Steckkontakt-Federaufnahme (222) aufweist.

4. Steckverbindersystem (1) nach Anspruch 1,
**dadurch gekennzeichnet, dass**
das Gegensteckverbinder-Kontaktelement (34) einen hohlzylindrischen Gegensteckkontakt-Crimpbereich (340), einen im wesentlichen zylindrischen Gegensteckkontakt-Kontaktbereiches (341) aufweist, wobei in Gegensteckrichtung (G) endseitig des Gegensteckkontakt-Kontaktbereiches (341) eine Gegensteckkontakt-Berührschutzaufnahme (342) ausgeformt ist, welche zur Aufnahme eines Gegensteckverbinder-Berührschutzes (34) vorgesehen ist.

5. Steckverbindersystem (1) nach Anspruch 1,
**dadurch gekennzeichnet, dass**
das Gegensteckverbinder-Kontaktelement einen hohlzylindrischen Gegensteckkontakt-Crimpbereich, einen im wesentlichen hohlzylindrischen Gegensteckkontakt-Kontaktbereiches aufweist, wobei in Gegensteckrichtung (G) endseitig des Gegensteckkontakt-Kontaktbereiches eine Gegensteckkontakt-Berührschutzaufnahme ausgeformt ist, welche zur Aufnahme eines Gegensteckverbinder-Berührschutzes vorgesehen ist.

6. Steckverbindersystem (1) nach Anspruch 5,
**dadurch gekennzeichnet, dass**
das Gegensteckverbinder-Kontaktelement innerhalb hohlzylindrischen Gegensteckkontakt-Kontaktbereichs weiterhin zumindest ein Gegensteckkontakt-Stiftelement vorgesehen ist, wobei ein korrespondierendes, Steckverbinder-Kontaktelement sich zwischen dem Gegensteck-Kontaktbereich und dem Gegensteckkontakt-Stiftelement elektrisch kontaktierend fügt.

7. Steckverbindersystem (1) nach einem der vorstehenden Ansprüche, **dadurch gekennzeichnet, dass** das Steckverbinder-Gehäuse (20) derart ausgeformt ist, dass es die Gegensteckverbinder-Kontaktdichtung (31) bei einem Steckvorgang verdrängt.

8. Steckverbindersystem (1) nach einem der vorstehenden Ansprüche, **dadurch gekennzeichnet, dass** das Gegensteckverbinder-Berührschutz (32) derart ausgeformt ist, dass er die Steckverbinder-Kontaktdichtung (21) bei einem Steckvorgang verdrängt.

9. Steckverbindersystem (1) nach einem der vorstehenden Ansprüche, **dadurch gekennzeichnet, dass** das Steckverbinder-Kontaktelement (22) im wesentlich als Buchsenkontakt ausgeführt ist und dass das Gegensteckverbinder-Kontaktelement (34) im Wesentlichen als Stiftkontakt ausgeführt ist oder umgekehrt.

10. Steckverbindersystem (1) nach einem der vorstehenden Ansprüche, **dadurch gekennzeichnet, dass** das Steckverbinder-Kontaktelement (22) in Steckrichtung (S) endseitig der Steckkontakt-Kontaktbereichs (221) eine Steckkontakt-Kontaktform (223) aufweist, welche die Kontaktierung des Steckverbinder-Kontaktelements (22) mit dem Gegensteckverbinder-Kontaktelement (34) sicherstellt.

11. Steckverbindersystem (1) nach einem der vorstehenden Ansprüche, **dadurch gekennzeichnet, dass** der Steckverbinder (2) einen Verriegelungsmechanismus (4) aufweist und der Gegensteckverbinder (3) eine mit dem Verriegelungsmechanismus (4) korrespondierende Verriegelungsform (200) aufweist, oder umgekehrt, wobei der Verriegelungsmechanismus (4) durch einen ersten Druck in Steckrichtung (S) verriegelnd ausgelöst wird.

12. Einpoliger Steckverbinder (2) gemäß einem Steckverbindersystem (1) nach Anspruch 1, aufweisend ein Steckverbinder-Gehäuse (20) und ein in dem Steckverbinder-Gehäuse (20) angeordnetem Steckverbinder-Kontaktelement (22), wobei das Steckverbinder-Kontaktelement (22) endseitig entgegen der Steckrichtung (S) einen Steckkontakt-Crimpbereich (220) und endseitig in Steckrichtung (S) einen Steckkontakt-Kontaktbereich (221) aufweist,
**dadurch gekennzeichnet, dass**
dem Steckkontakt-Kontaktbereich (221) eine Steckverbinder-Kontaktdichtung (21) angeordnet ist, welche durch einen korrespondierenden Gegensteckverbinder (3) während eines Steckvorgangs verdrängt wird.

13. Einpoliger Steckverbinder (2) nach Anspruch 12,
**dadurch gekennzeichnet, dass**
das Steckverbinder-Kontaktelement (22) an oder in dem Steckverbinder-Kontaktbereich (221) eine Steckkontakt-Federaufnahme (222) aufweist, welche zur Aufnahme einer Steckverbinder-Dichtfeder (23) ausgeformt ist und wobei die Steckverbinder-Kontaktdichtung (21) mit der Steckkontakt-Dichtfeder (23) interagiert.

14. Einpoliger Gegensteckverbinder (3) gemäß einem Steckverbindersystem (1) nach Anspruch 1, aufweisend ein Gegensteckverbinder-Gehäuse (30) und ein in dem Gegensteckverbinder-Gehäuse (30) angeordnetem Gegensteckverbinder-Kontaktelement (34), wobei das Gegensteckverbinder-Kontaktelement (34) endseitig entgegen der Gegensteckrichtung (G) einen Gegensteckkontakt-Crimpbereich (340) und endseitig in Gegensteckrichtung (G) einen Gegensteckkontakt-Kontaktbereich (341) aufweist,
**dadurch gekennzeichnet, dass**
dem Gegensteckkontakt-Kontaktbereich (341) eine Gegensteckverbinder-Kontaktdichtung (31) angeordnet ist, welche durch einen korrespondierenden Steckverbinder (2) während eines Steckvorgangs verdrängt wird.

15. Einpoliger Gegensteckverbinder (3) nach Anspruch 14,
**dadurch gekennzeichnet, dass**
das Gegensteckverbinder-Kontaktelement (34) von einer Gegensteckverbinder-Kontaktaufnahme (35) in dem Gegensteckverbinder-Gehäuse (30) gehalten wird, und dass an oder in der Gegensteckverbinder-Kontaktaufnahme (35) eine Gegensteckkontakt-Federaufnahme aufweist, welche zur Aufnahme einer Gegensteckverbinder-Dichtfeder (33) ausgeformt ist und wobei die Gegensteckverbinder-Kontaktdichtung (31) mit der Gegensteckkontakt-Dichtfeder (33) interagiert.

16. Verfahren zur Herstellung einer Steckverbindung, mit einem Steckverbindersystem (1) gemäß Anspruch 1, wobei ein Steckverbinder (2) eine Steckverbinder-Kontaktdichtung (21) aufweist und wobei ein Gegensteckverbinder (3) eine Gegensteckverbinder-Kontaktdichtung (31) aufweist, wobei der Steckverbinder (2) während eines Steckvorgangs eine Gegensteckverbinder-Kontaktdichtung (31) verdrängt und wobei der Gegensteckverbinder (3) während eines Steckvorgangs eine Steckverbinder-Kontaktdichtung (21) verdrängt, wobei die verdrängte Steckverbinder-Kontaktdichtung (21) ein Steckverbinder-Kontaktelement (22) freigibt und wobei die verdrängte Gegensteckverbinder-Kontaktdichtung (31) ein Gegensteckverbinder-Kontaktelement (34) freigibt.
